# EUROPEAN PATENT SPECIFICATION

(11) **EP 1 013 991 B1**
(45) Date of publication and mention of the grant of the patent: **19.05.2004**
(21) Application number: 97922807.9
(22) Date of filing: 22.05.1997
(51) Int. Cl.: F23G 5/00

(54) **A METHOD AND APPARATUS FOR RECOVERING ENERGY OF WASTE CLASSIFICATION INCINERATION**
VERFAHREN UND VORRICHTUNG ZUR RÜCKGEWINNUNG VON ENERGIE AUS MÜLLSORTIERUNG UND -VERBRENNUNG
PROCEDE ET DISPOSITIF DE RECUPERATION DE L'ENERGIE TIREE DE L'INCINERATION ET DU TRI DES DECHETS

(43) Date of publication of application: 28.06.2000
(73) Proprietor: Jian, Siren, Taipei (TW)
(72) Inventor: Jian, Siren, Taipei (TW)
(74) Representative: Viering, Jentschura & Partner
(86) International application number: PCT/CN1997/000050
(87) International publication number: WO 1998/053251

(56) References cited:
- EP-A- 0 448 178
- CN-B- 1 017 888
- GB-A- 1 331 777
- US-A- 5 445 088
- J. CARL, P. FRITZ: "Noell-Konversionsverfahren zur Verwertung und Entsorgung von Abfällen", 1994, EF-VERLAG FüR ENERGIE- UND UMWELTTECHNIK GMBH, BERLIN

## Description

### BACKGROUND OF THE INVENTION

### 1. Field of the invention

The invention relates to a method and apparatus for recovering energy of waste classification incineration and to apparatus therefor, and in particular, to a process and apparatus for recovering high added-value converted products such as fuel oil, carbon ash, gases and refractory materials through classifying wastes into combustible wastes and plastics wastes and calcining the same.

### 2. Description of the prior art

Recently, due to diversification in ordinary life, wastes produced by families and factories constantly increase while their types become more complicated. It is known that treatments of different types of wastes are different. However; since sorting of wastes is difficult, the problem of waste disposal is increasingly severe and is a problem that must be resolved immediately.
Conventional waste treatment comprises calcination or landfill without first sorting and treating separately according to types of wastes. Such waste disposal not only pollutes the environment but also, obviously, can not achieve the goal of energy recovery. Among the types of waste, plastic wastes have become major pollutants owing to their natural undegradability and gradual accumulation. Conventional disposal of plastic wastes comprises calcining or else, sorting for recovery. The calcination process consists of burning plastic waste directly, while the sorting/recovery process comprises sorting plastic wastes and recovering the reclaimed plastics. The former is purely consumption engineering which requires expensive equipment for preventing secondary public nuisances-such as air pollution, while the sorting recovery process has the problem of handling difficulties due to the great variety of types of plastics and additives contained therein. Also, the poor quality of reclaimed products makes the recovery process impractical.

In Jürgen Carl, Peter Fritz: Noell-Konversionsverfahren zur Verwertung und Entsorgung von Abfällen, EF-Verlag fur Energie- und Umwelttechnik GmbH, Berlin 1994 is disclosed an indirect heated pyrolysis of shreddered and dried, but not further classified wastes including a post-treatment of coke from the pyrolysis residue and a gasification step with recovery of usable gas from the pyrolysis exhaust gas and coke. The waste is heated by gas combustion in a rotating drum which is surrounded by a mantle for the heating gas. In this process there is no heating with an organic waste fraction mentioned nor any oil recovery. The condensate obtained in a gas-cooling stage is fed back to the gasification process with the aim to achieve only a gaseous product.

### SUMMARY OF THE INVENTION

In view of conventional waste disposal processes which are used for temporary convenience without considering the future global ecological environment, the inventors have planned and studied extensively, and as a result, have designed a process for waste treatment and an apparatus therefor, wherein, after being treated by the apparatus according to the invention, wastes do not occupy space as in the landfill process nor do they pollute the environment as in the calcination process. Furthermore, by means of waste classification and calcination, the apparatus according to the invention can convert useless wastes into high added-value products such as fuel oil, carbon ash, gas and refractory materials so as to achieve the goal of energy recovery.

Accordingly, the object of the invention is to provide a process for recovering energy through waste classification and calcination, and an apparatus therefor, which comprises applying a series of treatments, classification, calcination, and the recovering of wastes to be treated so as to efficiently recover fuel oil, fuel gases and reclaimed residues, and supply power and heat needed by the self-satisfying feedback system, as well as to reduce the possibility of secondary pollution from waste treatment.

### BRIEF DESCRIPTION OF THE DRAWINGS

The invention, as well as its many advantages, may be further understood by
the following detailed description and drawings in which:
Figure 1 is the flow chart of the process for energy recovery through waste classification and calcination according to the invention;
Figure 2 is the flow chart of related apparatus used in the process for energy recovery through waste classification and calcination according to the invention;
Figure 3 is the flow chart of related apparatus for waste sorting according to the invention;
Figure 4 is a diagram showing the structure of a calcination furnace fusing plastic wastes according to the invention; and
Figure 5 is a schematic diagram showing the reaction furnace for the irreversible cracking reaction of oil gas according to the invention.

### Explanation of the reference numbers:

- (1): pretreatment
- (10): wastes
- (11): mixed wastes
- (12): organic wastes
- (121): ash
- (13): light weight wastes
- (131): residues
- (2): waste treatment
- (2A): calcination of organic wastes
- (2B): heat melting
- (20): calcination furnace
- (201): furnace body
- (202): secondary calcination furnace
- (203): heat exchanger
- (204): steam electricity co-generation system
- (21): cracking furnace
- (211): cooling water lines
- (212): valve
- (213): lid
- (214): inlet
- (22): calcination plate
- (221): hole
- (23): conveying lines
- (24): heavy oil lines
- (241): valve
- (25): oil gas
- (251): oil gas lines
- (26): air lines
- (261): air
- (27): gas lines
- (28): mobile plate
- (29): hot flue gas
- (291): hot flue gas lines
- (3): irreversible cracking of oil gases
- (31): reactor
- (311): spacer
- (312): screen plate
- (32): first condenser
- (33): second condenser
- (34): precipitation tank
- (35): waste water treater
- (4): oil/gas separation
- (40): oil/gas separation tank
- (41): crude oil
- (411): distillate
- (412): heavy oil
- (413): distillate
- (414): distillate
- (42): fuel gas
- (43): gas storing tank
- (44): gas cylinder
- (45): heavy oil storing tank
- (5): fuel gas energy recovery
- (6): fractional distillation
- (60): fractionating column
- (61): cooler
- (62): distiller
- (63): storage in first oil storing tank
- (64): storage in second oil storing tank
- (65, 66): washing tank
- (67): diesel oil storing tank
- (671): diesel oil
- (68): gasoline storing tank
- (681): advanced gasoline
- (682): leadless gasoline
- (7): diesel oil energy recovery
- (9): garbage wagon
- (90): conveying belt
- (91): crusher
- (911): pulverator
- (92): conveying belt
- (X,Y,Z): outlet

### DETAILED DESCRIPTION OF THE PREFERRED EMBODIMENT

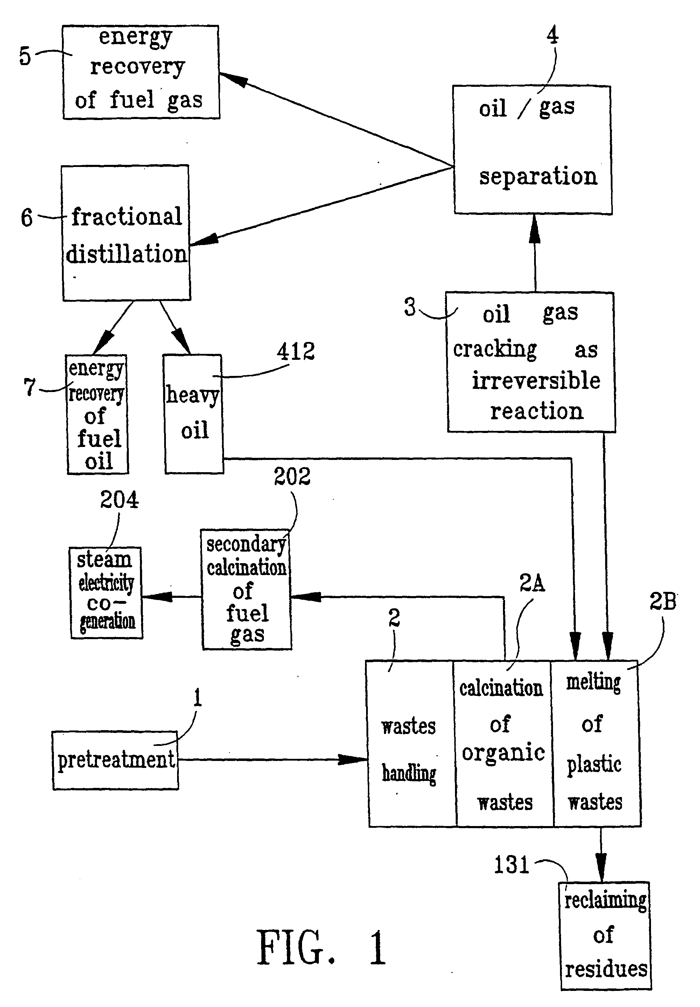

Refering to Figure 1, the invention provides a process for energy recovery through waste classification and calcination, comprising the steps of:

### (1) pretreatment

Crushing various waste (10) into crushed state and sorting the crushed wastes based on specific gravity into: mixed waste (11), organic waste (12) and light weight plastic waste (13), etc, among which mixed waste (11) can be subdivided to separate metal for further sale, while the remainder can be landfilled or made into artificial reef;

### (2) waste treatment

the plastics-containing light weight waste (13) obtained from the pretreatment step (1) described above can be mixed with solvent and subjected to heat dissolving treatment (2B), conducted while organic waste (12) obtained from the pretreatment step (1) can be calcined with gas (2A) where the high temperature heat energy generated can be used in heat dissolving (2B) of the light weight waste (13) , and in the cracking of plastics into oil gas (25);

### (3) irreversible cracking of oil gas

introducing oil gas (25) into a reactor (31) and carrying out conditions of an irreversible reaction to cleave molecules under controlled temperature and pressure;

### (4) oil/gas separation

collecting oil gas (25) obtained in above step (3) and cooling stepwise to near atmospheric temperature to condense and precipitate into a liquid state which is recovered as crude oil (41), while a part of the gases uncondensed is recovered as fuel gas (42);

### (5) fuel gas energy recovery

pressure liquifying fuel gas (42) obtained in step (4) described above can be stored or dispensed into cylinders for selling or providing heat for apparatus therein;

### (6) fractional distillation

crude oil (41) obtained from above step (4) can be heated, cooled, fractionally distilled and distillate (413,414) collected;

### (7) energy recovery from fuel oil

the distillates obtained from fractional distillation (6) described above can be subjected to pickling, neutralization and removal contaminants followed by precipitation to bleach and recovery as pure diesel oil or gasoline.

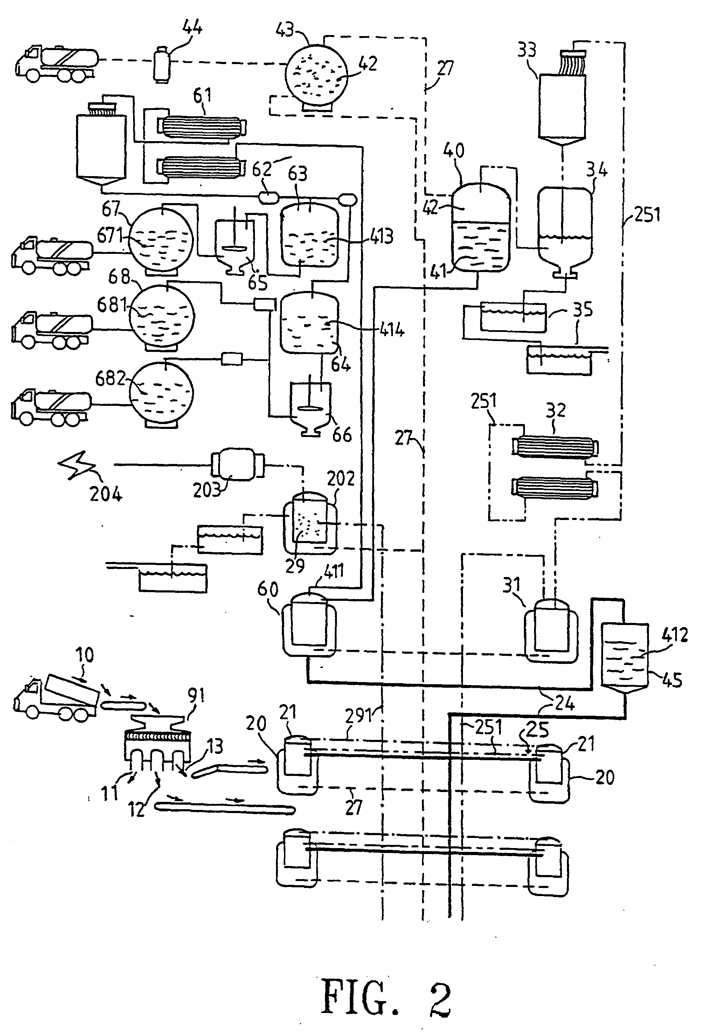

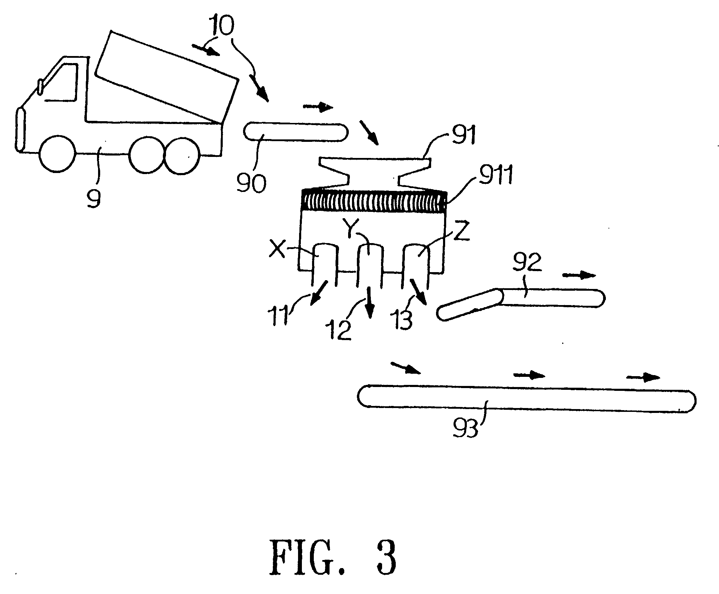

Based on the process described above and with reference to Figures 2 and 3, the apparatus for energy recovery through waste classification and calcination according to the invention will be described in detail. The apparatus of the invention comprises: garbage wagon (9) which carries wastes (10) and which is unloaded onto a conveyor belt (90) to convey wastes (10) to a crusher (91) equipped with a pulverator (911) therein for pulverizing wastes (10). Said pulverator can generate a huge wind power which can lower the water content of wastes and sort pulverized wastes based on their specific gravities. Wastes after sorting based on specific gravities can be classified into: mixed wastes (11), comprising metals, cans, synthetic resins, stone, wood, bamboo, concrete and so on, which are in a lump-form, and from which larger wood blocks can be picked up for burning; organic wastes (12) comprising ordinary family kitchen garbages of vegetable and animal origins, and tree branches and leaves, which are pulverized into fine grains; and light weight wastes (13), comprising papers, clothes, plastic bags and the like, which are pulverized into pieces. These three types of wastes are discharged separately from outlets (X,Y,Z) of the pulverator (91), among which mixed wastes (11) discharged out of outlet (X) can be disposed of by landfill process; organic wastes (12) discharged out of outlet (Y) can be conveyed via conveyor belt (23) to the conveying lines (23) of burning plate (23) in the calcining furnace (20); while light weight wastes (13) out of outlet (Z) can be conveyed via conveying belt (93) to the inlet (214) on the lid (213) of the cracking furnace (21) in the calcination furnace (20).

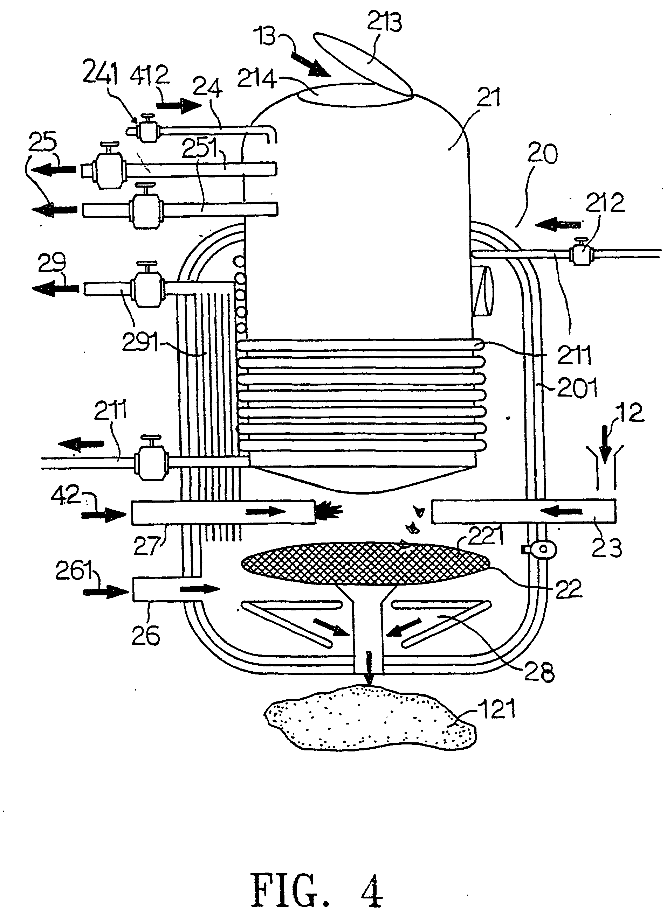

Now refering to Figure 4, a diagram showing the structure of the calcination furnace (20) in the apparatus for energy recovery through waste classification and calcination according to the invention, the furnace body (201) of said calcination furnace (20) is provided with a cracking furnace (21) at an appropriate position above and around said furnace body (201), cooling water lines (211) with a valve (212) at a suitable position thereon are provided, which can be used to regulate the flow rate of cooling water so as to control the temperature change in the cracking furnace (21). A lid (213) is provided on top of the calcination furnace, which can be opened for introducing light weight wastes (13) into the cracking furnace (21). The cracking furnace is connected with a heavy oil line (24) having a valve (241) which can control the amount of heavy oil flowing into the cracking furnace (21) (the heavy oil can be replaced by heavy petrols or light oil) for promoting the cracking of plastic wastes inside the cracking furnace (21). The cracking furnace is further connected with an oil gas line (251) which can recover oil gas (25) generated through the cracking of plastics contained in melted light weight wastes (13) in the cracking furnace. The heavy oil line (24) can be used further as a safety system for the case that lightweight wastes (13) contain large amounts of foams or sponges which receive heat more quickly, or when the oil gas line (251) is blocked such that oil gas generated cannot exit, which may lead to an increase of pressure inside the cracking furnace (21), then oils contained in the cracking furnace (21) can be discharged via the heavy oil line (24) into a heavy oil tank, and meanwhile, cool oil gas by means of the heavy oil line (24) so as to prevent the risk of excessively high pressure.

At a lower part of the cracking furnace (21), a burning plate (22) is provided, around which plate (22) are equipped an air line (26), a gas line (27) and a waste conveying line (23). The waste conveying line (23) can spread organic waste (12) on the burning plate (22), and after being mixed with air (261) from the air line (26) and gas (42) from the gas line (27), organic waste (12) can be burned on the burning plate (22), while heat generated during the burning the of organic the wastes can be transferred in directly to the cracking furnace above the burning plate (22) so as to melt and evaporate plastics into oil gas (25), which i turn is discharged via the oil gas line (251). In addition, since the burning plate (22) itself is provided with a plurality of holes (221) thereon and can rotate such that wastes (12) as well as ash (121) produced after burning of wastes can be distributed uniformly thereon and can fall down though those holes (221) onto a mobile plate (28). When there is sufficient ash (121) on the mobile plate, the weight of said ash will force the mobile plate (28) tilt such that those ashes will flow automatically out of the furnace body (201) along the mobile plate. Further, at a suitable height inside the calcination furnace (20) there is provided a flue gas line (291) which can collect flue gas (29) having a high temperature of 600 °C generated through burning of organic wastes (12) on the burning plate (22) and introduce said flue gas (29) into a secondary calcination furnace (202) where the temperature of said flue gas (29) can be raised to 1000 °C, and by passing through a heat exchanger (203), it can form high pressure and high temperature air for use in a steam electricity co-generating system (204) included in the apparatus according to the invention.

After introducing lightweight wastes (13) into the cracking furnace (21) of the calcination furnace according to the invention, an oil material (412) of a weight ratio of 1:10 is charged. This oil material (412) is preferably a heavy oil, since its boiling point is above 400 °C enabling it to dissolve and vaporize plastics before boiling. Then, the furnace is closed and heated to 85-130 °C for the first heating step to dissolve completely plastic wastes. Thereafter, the temperature is increased gradually, gas evolution begins at about 200 °C, and pressure increases dramatically. It should be noted that pressure control must be maintained carefully throughout the whole course of heating by constantly discharging the internal oil gas (25) so as to keep the pressure at 4 kg/cm². Subsequently, heating is continued slowly to reach a temperature of 340-380 °C, at which the plastic wastes in the furnace become sticky. When the temperature reaches 400-450 °C, the rate of gas production is the highest, and while at 500 °C, all vaporizable materials have been vaporized and passed through the oil gas line to be subsequently processed. The residues (131) remains in the furnace comprise original filler and residual carbon which, after being cooled under reduced pressure, is in the form of a black, light, porous sponge-like material which can be used as an adsorption agent or, depending on the nature of plastic waste, can be used to obtain products with commercial value such as coke, tar, active coke and so on. Moreover, due to their heat resistance and low thermal conductivity, these may be used to produce excellent materials such as carbon brick (a kind of advanced refractory brick), heat insulating materials and the like. In addition, after being ground by means of a grinding machine to a powder of a particle size of 2 mm, they can be used in heat insulating coatings for cars and when the powder is mixed with sticky asbestos or an other refractory material and water under stirring in a blender and then extruding and calcining, refractory bricks can be obtained.

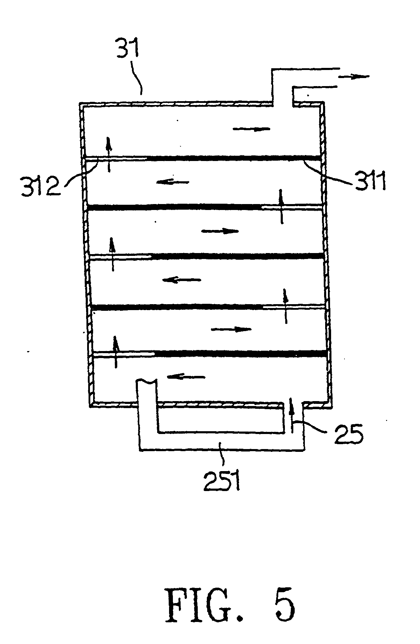

As shown in Figure 5, reactor (31) is a rectangular heating apparatus having a number of internal horizontal spacers (311) arranged along vertical axis , each of which has a screen plate (312) on one end thereof, wherein the screen plates on adjacent spacers are each on alternating opposite ends for communicating and those screen plates can be heated to 500-600 °C with pressure controlled at 2 kg/cm². When gas (25) produced in the cracking furnace (21) of the calcination furnace is in a reversible state due to incomplete cracking, the degraded chains may be rearranged into the form of a liquid or gel, which might block the lines. In view of this, according to the invention, this oil gas (25) is introduced first into the reactor (31) for preheating, and then, by means of the retarding effect of the screen plates (312), macromolecules are released and cleaved gradually into small molecules, while the cracking process in the cracking furnace is continued so as to block the reverse reaction and at the same time, by controlling the temperature at about 400°C, cracking of molecules can be stopped while instant rearrangement or stabilization occurs so that the reverse reaction will not take place.

Furthermore, irreversibly cracked oil gas (25) is collected by a first condenser (32) and its temperature is lowered stepwise to about 100 °C so as to stabilize completely the chemical state of the gas flow. Under this condition, macromolecules are converted into small ones and part of which have been condensed into liquid. Subsequently, the temperature of the oil gas (25) is lowered further down to an ambient temperature of about 35 °C by means of a second condenser (33), where the oil gas (25) is subjected to precipitation in a precipitating tank (34) to remove contaminants in the liquid. These contaminants are discharged out of a waste water treater (35), while the cleaned filtrate is transferred into an oil/gas separating tank (40), to settle down liquid alkanes higher than C5 (crude oil) (41). On the other hand, noncondensed gaseous alkanes lower than C4 (42) are pressure liquified and stored in a gas storage tank (44) which, after removing hazardous contaminants in an aqueous washing tank, is packaged in cylinders (44) for selling or to supply fuel to the in-line calcinating furnace (20), the secondary calcination furnace (202), the reactor (31) and the fractionating column (60).

The crude oil (41) in the oil/gas separating tank (40) is delivered continuously into a fractionating column (60) where, under heating to about 450 °C by burning gas, distillate (411) is condensed to 450 °C by a cooler (61) and then subjected to stepwise distillation by means of a distiller (62), and the distillates are then collected and stored. The distillate (413) obtained at 200-450 °C, having a quality close to diesel, is stored in an oil storing tank (63), while the distillate (414) obtained at 20-200 °C, having a quality close to gasoline, is stored in a second oil storage tank (64), and is transported to washing tanks (65,66) for pickling, neutralization and removal of contaminants therein, and then, after removal of trace water with activated clay and decolozation, can be recovered as diesel (671) and gasoline, to be stored in the diesel storage tank (67) and the gasoline storage tank (68), respectively. Moreover, tetraethyllead can be incorporated into the gasoline obtained to formulate into advanced gasoline (681) which, after being incorporated with methyl butyl ether, can be formulated into leadless gasoline (682) for marketing at gas stations.

In addition, heavy oil (412) settled in fractionating column (60) can be recovered in the heavy oil storage tank (45), and subsequently used in the cracking furnace (21) of the calcination furnace (20).

Accordingly, the apparatus for energy recovery through waste classification and calcination not only can sort and treat wastes, but can also recover various energy sources in wastes (gas, diesel, advanced gasoline and the like), wherein part of the energy source can be used for maintaining operation of the invention, so that the invention can be practiced self-sufficiently without addition of external energy sources.

Many changes and modifications in the above described embodiment of the invention can, of course, be carried out without departing from the scope thereof. Accordingly, to promote the progress in science and the useful art, the invention is disclosed and is intended to be limited only by the scope of the appended claims.

## Claims

1. A process for energy recovery by waste classification and calcination, comprises the steps of:
(1) pretreatment
Crushing various wastes (10) into a crushed state and sorting the crushed wastes based on specific gravity into: mixed waste (11), organic waste (12) and light weight plastic waste (13), etc., among which mixed waste (11) can be subdivided to separate metal for further sale, while the remainder can be landfilled or converted into artificial reef;
(2) waste treatment
the plastics-containing light weight waste (13) obtained from the pretreatment step (1) described above is mixed with solvent and is subjected to a heat dissolving treatment (2B), while organic waste (12) obtained from the pretreatment step (1) is calcinated with gas (2A) whereby the high temperature heat energy generated can be used in heat dissolving (2B) of the light weight waste (13) and in cracking of plastics into oil gas (25);
(3) irreversible cracking of oil gas
introducing the oil gas (25) into a reactor (31) and carrying out an irreversible reaction to cleave molecules under controlled temperature and pressure conditions;
(4) oil/gas separation
collecting the oil gas (25) obtained in the above cracking step (3) and cooling it stepwise to near atmospheric temperature to condense and precipitate it into liquid state to be recovered as crude oil (41), while a part of the uncondensed gases is recovered as a fuel gas (42);
(5) fuel gas energy recovery
pressure liquifying the fuel gas (42) obtained in the separation step (4) described above and storing it, or dispensing it into cylinders for selling or providing heat for apparatus within the process;
(6) fractional distillation
the crude oil (41) obtained from the above separation step (4) is heated, cooled, fractional distilled and a distillate (413,414) is collected;
(7) energy recovery from fuel oil
the distillates obtained from the fractional distillation (6) described above is subjected to pickling, neutralization and removal of contaminants followed by precipitation to bleach and recovery as pure diesel oil or gasoline.

2. A process as in claim 1, wherein said oil materials used as solvent comprise heavy oil, heavy petrols or light oil.

3. A process as in claim 1, wherein said light weight wastes are mixed with said solvent and are then subjected to the heat dissolving treatment (2B), whose residues are cooled under reduced pressure to form black, light, porous sponge-like materials which can be used as raw materials for refractory bricks.

4. A process as in claim 3, wherein said residues are used to obtain coke, tar, activated coke and the like, depending on the nature of the plastic waste.

5. A process as in claim 1, wherein said cracking step (3) comprises further introducing dissolved oil gas into said reactor and heating to 500 - 600°C while controlling the pressure at about 2 kg/cm² to continuously crack said dissolved oil gas in order to block reverse reaction, thereby gradually re easing and cleaving macromolecules into small molecules while undergoing instant rearrangement or stabilization as irreversible reaction.

6. A process as in claim 1, wherein said distillation step (6) comprises further fractional heating of said crude oil obtained in said oil/gas separation step (4) to about 450 °C for fractional distillation, and collecting and storing distillates at 20-200 °C and 200-400 °C respectively.

7. A process as in claim 1, wherein said heavy oil obtained by settling down in fractional distillation of said step (6) can be recovered and used as a heat source in the heat dissolution of said step (2).

8. An apparatus for energy recovering by waste classification and calcination, comprising:
a crusher (91, 910), crushing wastes into broken pieces, and sorting said broken wastes based on their specific gravities into: mixed wastes (11), organic waste (12) and light weight wastes (13), wherein said mixed wastes can be disposed by landfill;
a calcination furnace (20), calcining said organic wastes (12) and light weight wastes (13), comprising a cracking furnace (21), provided at an appropriate position inside said calcination furnace (20), and being equipped with a lid (213) at the top thereof for introducing said light weight wastes (13), a heavy oil line (24) for introducing heavy oil to mix with and crack said plastic wastes, an oil gas line (251) for recovering oil gas (25) generated from cracking of said melted plastics in said light weight wastes;
a burning plate (22), provided at a proper place below said cracking furnace (21), and being equipped with an air line (26), a gas line (27) and a waste conveying line (23), where organic wastes (12) being spreaded on said burning plate (22) via said waste conveying line (23) and mixed with air (261) and gas (42) charged from said air line (26) and said gas line (27) respectively, whereby said organic wastes (12) on said burning plate (22) are subjected to a calcinating treatment such that high temperature heat generated therefrom is able to be transferred indirectly to said cracking furnace (21) above for melting and vaporizing said plastics into oil gas (25) which is discharged via said oil gas line (251);
a reactor (31), receiving and heating said oil gas (25) under controlled pressure to cleave molecules as an irreversible reaction,
a cooler (32, 33), cooling said products obtained in said reactor (31) to near ambient temperature in a stepwise fashion to condense said oil gas (25) thereby receiving products;
a settling tank (34), settling down said condensed products obtained from said reactor (31);
an oil/gas separating tank (40), separating said products into a crude oil (41) and a fuel gas (42);
a fractionating column (60), heating said crude oil (41);
a cooler (61), cooling said crude oil (41);
a distiller (62), stepwise distilling said crude oil (41) and collecting and storing respective distillates;
washing tanks (65, 66), pickling, neutralizing and removing contaminants in said distillates to obtain pure diesel and gasoline; whereas fuel gas can be pressure liquified to be stored or packed in cylinders (44) for marketing or used as heat sources for said apparatus.

9. An apparatus as in claim 8, further comprising a secondary calcination furnace (202) which heats a high temperature flue gas generated in said calcination furnace to a higher temperature, and a heat exchanger (203) for using the heat energy of said flue gas in an in-line steam electricity co-generating system.

10. An apparatus as in claim 8, wherein said burning plate (22) can rotate and comprises a plurality of holes (221), thereby distributing uniformly said organic wastes thereon, while residues (121) generated after burning said organic wastes can fall down through said holes (221) onto a mobile plate (28) below said burning plate (22) and force said mobile plate (28) to tilt under weight of said residues (121) so as to discharge said residues (121) out of said calcination furnace (20).

11. An apparatus as in claim 8, wherein said reactor (31) is a rectangular heating apparatus having a number of internal horizontal spacers (311) arranged along vertical axis forming layers in said reactor (31), wherein each of said spacer (311) has a screen plate (312) on its one end and said screen plates (312) on adjacent spacers (311) are each on an alternately opposite end for communicating, thereby cleaving molecules of the oil gas (25) layer by layer.

## Patentansprüche

1. Verfahren zur Energierückgewinnung durch Abfallklassifizierung und -kalzinierung, umfassend folgende Schritte:
(1) Vorbehandlung
Zerstoßen verschiedener Abfälle (10) in einen zerstoßenen Zustand und Sortieren der zerstoßenen Abfälle auf der Grundlage des spezifischen Gewichts in: gemischten Abfall (11), organischen Abfall (12) und leichten Kunststoffabfall (13) usw., von welchen der gemischte Abfall (11) weiter unterteilt werden kann, um Metall für den Verkauf abzuscheiden, während der Rest der Deponierung zugeführt oder in ein künstliches Riff umgewandelt werden kann;
(2) Abfallbehandlung
Der kunststoffhaltige leichte Abfall (13) , der aus dem oben beschriebenen Vorbehandlungsschritt (1) gewonnen wurde, wird mit Lösemittel gemischt und einer Wärmeauflösungsbehandlung (2B) unterzogen, während der organische Abfall (12) , der aus dem Vorbehandlungsschritt (1) gewonnen wurde, mit Gas (2A) kalziniert wird, wodurch die erzeugte Hochtemperatur-Wärmeenergie beim Wärmeauflösen (2B) des leichten Abfalls (13) und beim Spalten von Kunststoffen in Ölgas (25) genutzt werden kann;
(3) irreversibles Spalten von Ölgas
Einführen von Ölgas (25) in einen Reaktor (31) und Durchführen einer irreversiblen Reaktion, um Moleküle unter geregelter Temperatur und geregeltem Druck zu spalten;
(4) Öl/Gas-Abscheidung
Auffangen des Ölgases (25), welches im oben genannten Schritt des Spaltens (3) gewonnen wurde, und stufenweises Kühlen desselben auf nahezu Lufttemperatur, um es in einen flüssigen Zustand zu kondensieren und zu präzipitieren, welcher als Rohöl (41) rückzugewinnen ist, während ein Teil der unkondensierten Gase als Brenngas (42) rückgewonnen wird;
(5) Brenngasenergierückgewinnung
Druckverflüssigen des Brenngases (42), das im oben beschriebenen Schritt der Abscheidung (4) gewonnen wurde, und Lagern desselben oder Abfüllen desselben in Flaschen zum Verkauf oder zum Bereitstellen von Wärme für die Vorrichtung innerhalb des Prozesses;
(6) Fraktionierte Destillation
Das Rohöl (41), welches im oben genannten Schritt des Abscheidens (4) gewonnen wurde, wird erhitzt, gekühlt, fraktioniertdestilliert, undeinDestillat (413, 414) wird aufgefangen;
(7) Energierückgewinnung aus Brennöl
Die aus der oben beschriebenen fraktionierten Destillation (6) gewonnenen Destillate werden Beizen, Neutralisieren und dem Entfernen von Schmutzstoffen und dann dem Präzipitieren zum Bleichen unterzogen und werden dann als reines Dieselöl oder Benzin rückgewonnen.

2. Verfahren nach Anspruch 1, wobei die Ölmaterialien, die als Lösemittel verwendet werden, Schweröl, Schwerbenzine oder Leichtöl umfassen.

3. Verfahren nach Anspruch 1, wobei die leichten Abfälle mit dem Lösemittel gemischt und dann der Wärmelösungsbehandlung (2B) unterzogen werden, deren Rückstände unter reduziertem Druck gekühlt werden, um ein schwarzes, leichtes, poröses, schwammartiges Material zu bilden, das als Rohmaterial für feuerfeste Ziegel verwendet werden kann.

4. Verfahren nach Anspruch 3, wobei die Rückstände verwendet werden, um jenach der Art des Kunststoffabfalls Koks, Teer, Aktivkoks und dergleichen zu gewinnen.

5. Verfahren nach Anspruch 1, wobei der Schritt des Spaltens (3) weiterhin das Einführen von gelöstem Ölgas in den Reaktor und das Erhitzen auf 500-600 °C, wobei der Druck auf etwa 2 Kg/cm² geregelt wird, um die Reaktion umzukehren, umfasst, wodurch allmählich Makromoleküle freigesetzt und in kleine Moleküle gespalten werden, wobei sie sofortige Neuanordnung oder Stabilisierung als irreversible Reaktion erfahren.

6. Verfahren nach Anspruch 1, wobei der Schritt des Destillierens (6) weiterhin fraktioniertes Erhitzen des Rohöls, das im Schritt der Öl/Gas-Abscheidung (4) gewonnen wurde, auf etwa 450 °C zur fraktionierten Destillation und Auffangen und Lagern der Destillate bei 20-200 °C bzw. 200-400 °C umfasst.

7. Verfahren nach Anspruch 1, wobei das Schweröl, welches durch das Abscheiden in der fraktionierten Destillation von Schritt (6) gewonnen wird,rückgewonnen und als Wärmequelle beim Wärmeauflösen von Schritt (2) genutzt werden kann.

8. Vorrichtung zur Energierückgewinnung durch Abfallklassifizierung und -kalzinierung, umfassend:
ein Brechwerk (91,910), welches Abfälle in zerbrochene Stücke zerstößt und die zerbrochenen Abfälle unter Zugrundelegung ihres spezifischen Gewichts sortiert in: gemischte Abfälle (11) , organische Abfälle (12) und leichte Abfälle (13), wobei die gemischten Abfälle durch Deponierung entsorgt werden können;
einen Kalzinierofen (20), der die organischen Abfälle (12) und die leichten Abfälle (13) kalziniert, umfassend einen Spaltofen (21), der an einer geeigneten Position innerhalb des Kalzinierofens (20) vorgesehen ist und mit einem Deckel (213) an seinem oberen Ende zum Einführen der leichten Abfälle (13) , einer Schwerölleitung (24) zumEinführenvon Schweröl, um sich mit den Kunststoffabfällen zu vermischen und diese zu spalten, einer Ölgasleitung (251) zum Rückgewinnen von Ölgas (25), welches durch das Spalten der geschmolzenen Kunststoffe in den leichten Abfällen erzeugt wird, ausgestattet ist;
eine Brennplatte (22), die an einem geeigneten Ort unterhalb des Spaltofens (21) vorgesehen und mit einer Luftleitung (26) , einer Gasleitung (27) und einer Abfallförderleitung (23) ausgestattet ist, wobei organische Abfälle (12) über die Abfallförderleitung (23) auf der Brennplatte (22) verteilt und mit Luft (261) und Gas (42), welche aus der Luftleitung (26) bzw. aus der Gasleitung (27) zugeführt werden, vermischt werden, wodurch die organischen Abfälle (12) auf der Brennplatte (22) einer Kalzinierungsbehandlung unterzogen werden, derart, dass dadurch erzeugte Wärme mit hohen Temperaturen indirekt zum darüber angeordneten Spaltofen (21) übertragen werden kann, zum Schmelzen und Verdampfen der Kunststoffe zu Ölgas (25) , welches über die Ölgasleitung ausgetragen wird (251);
einen Reaktor (31), welcher das Ölgas (25) entgegennimmt und unter geregeltem Druck erhitzt, um Moleküle als irreversible Reaktion zu spalten,
einen Kühler (32,33), welcher die Produkte, die im Reaktor (31) gewonnen wurden, stufenweise auf nahezu Umgebungstemperatur herunterkühlt, um das Ölgas (25) zu kondensieren und dadurch Produkte zu erhalten;
ein Absetzbecken (34), in welchem sich die kondensierten Produkte, die vom Reaktor (31) gewonnen wurden, absetzen; ein Öl/Gas-Abscheidebecken (40), welches die Produkte in Rohöl (41) und Brenngas (42) trennt;
eine Fraktioniersäule (60), welche das Rohöl (41) erhitzt;
einen Kühler (61), welcher das Rohöl kühlt (41); einen Destillator (62), welcher das Rohöl (41) stufenweise destilliert und auffängt und entsprechende Destillate lagert;
Waschbehälter (65,66), welcher das Beizen, das Neutralisieren und das Entfernen von Schmutzstoffen in den Destillaten durchführt, um reines Diesel und Benzin zu gewinnen; wohingegen Brenngas druckverflüssigt werden kann, um gelagert oder in Flaschen (44) zum Verkauf verpackt oder als Wärmequelle für die Vorrichtung genutzt zu werden.

9. Vorrichtung nach Anspruch 8, weiterhin umfassend einen sekundären Kalzinierofen (202), welcher ein Hochtemperatur-Rauchgas, das im Kalzinierofen erzeugt wurde, auf eine höhere Temperatur erhitzt, und einen Wärmetauscher (203) zum Nutzen der Wärmeenergie des Rauchgases in einer prozessinternen Dampf-Elektrizitäts-Heizkraftanlage.

10. Vorrichtung nach Anspruch 8, wobei sich die Brennplatte (22) drehen kann und eine Mehrzahl von Löchern (221) umfasst, wodurch die organischen Abfälle gleichmäßig darauf verteilt werden, während Rückstände (121), die nach dem Verbrennen der organischen Abfälle anfallen, durch die Löcher (221) auf eine bewegliche Platte (28) unter der Brennplatte (22) herabfallen und die bewegliche Platte (28) veranlassen können, unter dem Gewicht der Rückstände (121) zu kippen, um die Rückstände (121) aus dem Kalzinierofen (20) auszutragen.

11. Vorrichtung nach Anspruch 8, wobei der Reaktor (31) eine rechteckige Heizvorrichtung mit einer Anzahl von inneren horizontalen Trennelementen (311) ist, die entlang der vertikalen Achse angeordnet sind und Schichten im Reaktor (31) bilden, wobei jedes der Trennelemente (311) an einem seiner Enden eine Siebplatte (312) aufweist und die Siebplatten (312) auf benachbarten Trennelementen (311) jeweils abwechselnd auf einem entgegengesetzten Ende zum Kommunizieren angeordnet sind, wodurch Moleküle des Ölgases (25) Schicht um Schicht gespalten werden.

## Revendications

1. Processus de récupération d'énergie par classification et calcination de déchets, comprenant les étapes suivantes:
(1) traitement préalable
broyage de déchets variés (10) jusqu'à ce qu'ils soient à l'état broyés et triage des déchets broyés selon leur dangerosité spécifique en : déchets mélangés (11), déchets organiques (12) et déchets plastiques de faible poids (13) etc., parmi lesquels déchets, les déchets mélangés (11) peuvent être subdivisés afin d'isoler le métal pour la vente, alors que le reste peut être mis en décharge publique en fouille ou enfoui dans des veines artificielles ;
(2) traitement des déchets
les déchets légers (13) contenant des matières plastiques obtenus suite à l'étape de traitement préalable (1) décrite ci-dessus sont mélangés avec un solvant et sont soumis à un traitement de dissolution à chaud (2B), alors que les déchets organiques (12) obtenus à l'issue de l'étape de traitement préalable (1) sont calcinés avec du gaz (2A), moyennant quoi l'énergie calorifique de température élevée qui est générée peut être utilisée pour la dissolution à chaud (2B) des déchets à faible poids (13), et pour le craquage des matières plastiques en gaz des graisses (25) ;
(3) craquage irréversible de gaz des graisses
introduction de gaz des graisses (25) dans un réacteur (31) et exécution de la réaction irréversible pour briser les molécules à température et pression contrôlées;
(4) séparation huile/gaz
collecte du gaz des graisses (25) obtenu au cours de l'étape de craquage ci-dessus (3) et refroidissement progressif de celui-ci jusqu'à se rapprocher de la température atmosphérique pour sa condensation et précipitation à l'état liquide pour être récupéré en tant qu'huile brute (41), alors qu'une partie du gaz non condensé est récupérée en tant que gaz combustible (42);
(5) liquéfaction sous pression du gaz combustible
(42) obtenu lors de l'étape de séparation (4) décrite plus haut, et stockage de celui-ci ou distribution de celui-ci dans des bouteilles pour la vente ou pour fournir de la chaleur pour l'appareil au cours du processus ;
(6) distillation fractionnée
l'huile brute (41) obtenue à l'issue de l'étape de séparation (4) ci-dessus est chauffée, refroidie, distillée de manière fractionnée, et un distillat (413, 414) est collecté ;
(7) récupération d'énergie à partir du mazout
les distillats obtenus à partir de la distillation fractionnée (6) décrite ci-dessus sont soumis au décapage, à la neutralisation et à l'élimination des contaminants, et ensuite précipités pour le blanchiment et récupérés en tant que pur carburant diesel ou essence.

2. Processus selon la revendication 1, dans lequel lesdites matières huileuses utilisées en tant que solvant comprennent de l'huile lourde, des essences lourdes ou de l'huile fluide.

3. Processus selon la revendication 1, dans lequel lesdits déchets de faible poids sont mélangés avec ledit solvant et sont ensuite soumis au traitement de dissolution à chaud (2B), leurs résidus étant refroidis sous pression réduite afin de former un matériau noir, léger, poreux et semblable à une éponge qui peut être utilisé en tant que matière brute pour des briques réfractaires.

4. Processus selon la revendication 3, dans lequel lesdits résidus sont utilisés pour l'obtention de coke, goudron, de coke actif et similaires, en fonction de la nature des déchets plastiques.

5. Processus selon la revendication 1, dans lequel ladite étape de craquage (3) comprend par ailleurs l'introduction de gaz des graisses dissout dans ledit réacteur et un échauffement à 500-600 °C en contrôlant la pression pour la maintenir à environ 2 Kg/cm² pour inverser la réaction, en relâchant de la sorte à nouveau et en brisant progressivement les macromolécules en petites molécules pendant la soumission au réarrangement pressant ou à la stabilisation en tant que réaction irréversible.

6. Processus selon la revendication 1, dans lequel ladite étape de distillation (6) comprend en outre l'échauffement fractionné de ladite huile brute obtenue au cours de ladite étape de séparation de l'huile/gaz (4) à environ 450 °C pour la distillation fractionnée, et la collecte et le stockage des distillats à respectivement 20-200 °C et 200-400 °C.

7. Processus selon la revendication 1, dans lequel ladite huile lourde obtenue par décantation lors de la distillation fractionnée de ladite étape (6) peut être récupérée et utilisée en tant que source de chaleur lors de la dissolution à chaud de ladite étape (2).

8. Appareil pour la récupération d'énergie par classification et calcination de déchets, comprenant :
un broyeur (91,910) qui réduit les déchets en morceaux et trie lesdits déchets en morceaux selon leur dangerosité spécifique en : déchets mélangés (11), déchets organiques (12) et déchets de faible poids (13), lesdits déchets mélangés pouvant être éliminés par mise en décharge publique en fouille ;
un four de calcination (20) qui calcine lesdits déchets organique (12) et déchets de faible poids (13), comprenant un four de craquage (21) fourni dans une position appropriée à l'intérieur dudit four de calcination (20), et équipé d'un couvercle (213) sur son haut pour l'introduction desdits déchets de faible poids (13), une conduite d'huile lourde (24) pour introduire l'huile lourde pour mélanger avec et craquer lesdits déchets en matières plastiques, une canalisation de gaz des graisse (251) pour la récupération du gaz des graisses (25) généré suite au craquage desdites matières plastiques fondues dans lesdits déchets de faible poids ;
une tôle de brûlage (22) fournie en un emplacement adéquat en-dessous dudit four de craquage (21), et équipée d'une conduite d'air (26), d'une canalisation de gaz (27) et d'une bande transporteuse (23) pour les déchets, où les déchets organiques (12) sont répandus sur ladite tôle de brûlage (22) via ladite bande transporteuse (23) et sont mélangés avec l'air (261) et le gaz (42) chargés respectivement à partir de ladite conduite d'air (26) et ladite canalisation de gaz (27), moyennant quoi, lesdits déchets organiques (12) sur ladite tôle de brûlage (22) sont soumis à un traitement de calcination tel que la chaleur de forte température générée à partir de là peut être transférée indirectement à ledit four de craquage (21) ci-dessus pour faire fondre et s'évaporer lesdites matières plastiques sous forme de gaz des graisses (25) qui est évacué via ladite canalisation de gaz des graisses (251);
un réacteur (31) recevant et échauffant ledit gaz des graisses (25) avec une pression contrôlée afin de briser les molécules en tant que réaction irréversible,
un refroidisseur (32,33) qui refroidit progressivement lesdits produits obtenus dans ledit réacteur (31) pour se rapprocher de la température ambiante afin de condenser ledit gaz des graisses (25) en recevant ainsi les produits ;
un bassin de décantation (34) qui fait décanter lesdits produits condensés obtenus à partir dudit réacteur (31) ;
un bac de séparation d'huile/gaz (40) qui sépare lesdits produits en huile brute (41) et gaz combustible (42) ;
une colonne de fractionnement (60), qui chauffe ladite huile brute (41) ;
un refroidisseur (61) qui refroidit ladite huile brute (41) ; un distillateur (62) qui distille progressivement ladite huile brute (41) et qui collecte et stocke les distillats respectifs ;
des bacs de décantation (65,66) qui décapent, neutralisent et éliminent les contaminants dans lesdits distillats afin d'obtenir du Diesel et de l'essence purs; alors que le gaz combustible peut être liquéfié sous pression pour être stocké ou conditionné en bouteilles (44) pour la vente ou pour être utilisé en tant que source de chaleur pour ledit appareil.

9. Appareil selon la revendication 8, comprenant par ailleurs un four de calcination secondaire (202) qui échauffe un gaz brûlé de température élevée généré dans ledit four de calcination à une température plus élevée, et un échangeur de chaleur (203) pour utiliser l'énergie calorifique dudit gaz brûlé dans un système de cogénération de vapeur-électricité en ligne.

10. Appareil selon la revendication 8, dans lequel ladite tôle de brûlage (22) peut tourner et comprend une pluralité de trous (221) en distribuant ainsi uniformément dessus lesdits déchets organiques, alors que les résidus (121) générés après le brûlage desdits déchets organiques peuvent tomber à travers lesdits trous (221) sur une tôle mobile (28) en-dessous de ladite tôle de brûlage (22) et peuvent forcer ladite tôle mobile (28) à s'incliner sous le poids desdits résidus (121) de sorte à évacuer lesdits résidus (121) hors dudit four de calcination (20).

11. Appareil selon la revendication 8, dans lequel ledit réacteur (31) est un appareil d'échauffement de forme rectangulaire ayant un certain nombre de pièces d'écartement (311) horizontales internes disposées le long d'un axe vertical formant des couches dans ledit réacteur (31), chacune des pièces d'écartement (311) possédant une tôle perforée (312) sur une de ses extrémités et où lesdites tôles perforées (312) sur les pièces d'écartement (311) adjacentes sont chacune sur une extrémité tour à tour opposée pour communiquer, en brisant ainsi les molécules du gaz des graisses (25) couche par couche.
